# EUROPÄISCHE PATENTSCHRIFT

(11) **EP 1 951 833 B1**
(45) Veröffentlichungstag und Bekanntmachung des Hinweises auf die Patenterteilung: **27.07.2016**
(21) Anmeldenummer: 06819235.0
(22) Anmeldetag: 03.11.2006
(51) Int. Cl.: C09J 7/02

(54) **VERWENDUNG EINES DOPPELSEITIGEN HAFTKLEBEBANDES ZUR VERKLEBUNG BEI DER HERSTELLUNG VON ELEKTRONIKARTIKELN**
USE OF A DOUBLE-SIDED PRESSURE-SENSITIVE ADHESIVE TAPE FOR BONDING IN THE MANUFACTURE OF ELECTRONICS ARTICLES
UTILISATION D'UN RUBAN ADHESIF DOUBLE FACE POUR LE COLLAGE LORS DE LA FABRICATION D'ARTICLES ELECTRONIQUES

(30) Priorität: 15.11.2005 DE 102005054781
(43) Veröffentlichungstag der Anmeldung: 06.08.2008
(73) Patentinhaber: tesa SE, 22848 Norderstedt (DE)
(72) Erfinder: UTESCH, Nils, 22589 Hamburg (DE); ZÖLLNER, Stephan, 21244 Buchholz/Nordheide (DE); KERBER, Kristin, 22529 Hamburg (DE); HERRMANN, Alexander, 22529 Hamburg (DE)
(86) Internationale Anmeldenummer: PCT/EP2006/068058
(87) Internationale Veröffentlichungsnummer: WO 2007/057304

(56) Entgegenhaltungen:
- DE-A1- 10 228 614
- US-B1- 6 521 309

## Beschreibung

Die Erfindung betrifft die Verwendung eines doppelseitigen Klebebandes zur Verklebung bei der Herstellung von Elektronikartikeln, insbesondere bei der Herstellung von Optischen Datenanzeige-Artikeln (LCD-Produkten).

Haftklebebänder sind im Zeitalter der Industrialisierung weit verbreitete Verarbeitungshilfsmittel. Insbesondere für den Einsatz in der Computerindustrie werden an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.

Ein Einsatzgebiet sind LC-Displays, die für Computer, Fernsehgeräte, Laptops, PDA's, Mobiltelefone, Digitale Kameras etc. benötigt werden.

Gegen Umwelteinflüsse wie Staub und Feuchtigkeit werden optische Datenanzeigen (Flüssigkristallanzeigen, LCDs) bei ihrer Verwendung in der Elektronikindustrie wie beispielsweise in Mobiltelefonen, Flachbildschirmen, Digitalkameras oder Laptops durch Schäume oder gummielastische Kunststoffe, insbesondere solche auf Basis von Polyethylen (PE), Polyurethan (PU) und Silicon, geschützt. Darüber hinaus bewahren die genannten Materialien aufgrund ihrer schockabsorbierenden Eigenschaften die LCDs vor Zerstörung durch einzelne oder wiederholende Stoß- oder Schlageinwirkungen (das so genannte LCD-Cushioning). Aufgrund des viskoelastischen Profils zeichnet sich für die vibrationsdämpfende Funktion insbesondere Silicon aus, das zusätzlich im Vergleich zu PE und PU den breitesten Temperaturanwendungsbereich sowie die höchste chemische und physikalische Beständigkeit aufweist.

Die herausragenden Eigenschaften von Siliconkautschuken und -schäumen sind neben einer hohen UV- und Ozonbeständigkeit insbesondere die kombinierten Funktionen aus hoher Temperaturbeständigkeit, Elastizität und ausgeprägtem Dämpfungsverhalten gegenüber Schockeinflüssen und Vibrationen. Darüber hinaus haben Langzeittemperaturbelastungen im Bereich von -75 °C bis 260 °C keinen negativen Einfluss auf die Materialeigenschaften von Siliconkautschuken. Diesbezüglich finden Siliconkautschuke und -schäume breite Anwendung im Bereich der Dämpfung von LCDs.

Klebebänder, die auf zwei unterschiedlichen Haftklebern wie Polyacrylaten und Silicon basieren sind, zur Fixierung der genannten Siliconkautschuke und -schäume in elektronischen Geräten bekannt (siehe z.B. US Pat. 6,521,309). Hinsichtlich der Verankerung der Siliconhaftklebemasse auf dem Träger sowie der Resistenz gegenüber in den Substraten enthaltenen Weichmachern sind diese Klebebänder nicht spezifiziert. So ist bei den Klebebändern insbesondere durch die Einwanderung der in den Siliconkautschuken enthaltenen Weichmacher eine Verschlechterung der Verankerung über die Zeit festzustellen.

Die DE 102 28 614 A1 beschreibt ebenfalls die Verklebung eines Klebebandes mit einer Klebeschicht auf Siliconbasis auf einem Körper aus Silicon. Die Siliconklebeschicht des Klebebandes wird allerdings erst vernetzt, nachdem sie auf den Körper aufgebracht wurde; die Vernetzung erfolgt jeweils erst im vierten Verfahrensschritt bereits im Klebeverbund.

Aufgabe der Erfindung ist es daher, Klebebänder zur Verfügung zu stellen, die eine Einwanderung der Weichmacher weitgehend vermeiden und den klebtechnischen Anforderungen für die vorstehend genannten Anwendungsgebiete trotzdem genügen.

Gelöst werden konnte die Aufgabe durch die Verwendung spezieller Klebebänder, wie es im Hauptanspruch dargelegt ist. Die Unteransprüche betreffen Weiterentwicklungen dieser Verwendung. Weiterhin betreffen die Ansprüche eine derart hergestellte Verklebungseinheit.

Der Hauptanspruch betrifft ein Verfahren zur Verklebung von Siliconkautschuken oder - schäumen unter Verwendung eines doppelseitigen Klebebandes, wobei das Klebeband einen Träger und zwei Kleberschichten aufweist, wobei die erste Kleberschicht aus einer Haftklebemasse auf Acrylatbasis und die zweite Kleberschicht aus einer Siliconhaftklebemasse besteht, dadurch gekennzeichnet, dass die Kleberschicht aus der Siliconhaftklebemasse auf dem Siliconkautschuk bzw. -schaum verklebt wird und die Siliconhaftklebemasse vor der Verklebung vernetzt ist.

Mit dem erfindungsgemäß verwendeten Klebeband ist es möglich, Siliconschäume und -kautschuke einfach, schnell, zuverlässig und platzsparend auf einem Untergrund unter Gewährleistung eines dauerhaften Verbundes zu fixieren.

Erfindungsgemäß wird dies bei dem erfindungsgemäßen Verfahren dadurch erzielt, dass neben einer vernetzten und dadurch temperaturbeständigen Actrylathaftklebemasse ein druckempfindlicher Siliconkleber eingesetzt wird, der aufgrund chemischer oder physikalischer Vernetzung Alterungs- und Weichmacherresistenz aufweist.

Überraschend und für den Fachmann unerwartet kann die Einwanderung von Weichmachern in die Siliconklebemasse der erfindungsgemäß verwendeten Klebebänder weitgehend vermieden werden, indem die Siliconmasse der Klebebänder zuvor physikalisch und/oder chemisch vernetzt wird.
Der Fachmann kennt die Vernetzung von Haftklebemassen zur Erhöhung der Kohäsion dieser Massen und zur Einstellung bestimmter klebtechnischer Eigenschaften. Einen Einfluss auf die Resistenz gegenüber Weichmachern konnte er nicht erwarten, dies umso weniger, als andere bekannte Haftklebemassen wie z.B. Acrylathaftklebemassen diesen Effekt nicht aufzeigen. Er hatte also keinerlei Veranlassung, die oben genannte Aufgabe durch einen Vernetzungsprozess lösen zu wollen.

Die erfindungsgemäß eingesetzten doppelseitigen Klebebänder bestehen aus einem - bevorzugt bandförmigen - Träger und beidseitig auf dem Träger aufgebrachten Kleberschichten.

Besonders bevorzugt werden Haftklebebänder verwendet, bei denen der Träger aus einer PET-Folie besteht, insbesondere einer solchen mit einer Folienstärke von 12 µm bis 50 µm. Die Folie sollte bevorzugt temperaturbeständig und formstabil sein.

Die erste Kleberschicht besteht aus einer Acrylathaftklebemasse. Der Einsatz dieses Materials stellt neben einer UV- und Chemikalienbeständigkeit vor allem eine Dauertemperaturbeständigkeit von 100 °C sowie einer Kurzzeittemperatur-beständigkeit von 200 °C sicher. Um eine sichere Verklebung auf unterschiedlichen Untergründen zu gewährleisten, kann diese Acrylathaftklebemasse vorteilhaft mit Harzen, Weichmachern und/ oder Füllstoffen additiviert werden.
Besonders vorteilhaft werden solche Acrylathaftkleber eingesetzt, die aufgrund ihrer chemischen Struktur oder physikalischen Beschaffenheit eine hohe Haftung auf polaren Untergründen aufweisen.
Als sehr geeignet haben sich Acrylathaftkleber gezeigt, welche aus Lösungs- oder Emulsionspolymerisaten oder UV-vernetzten Präpolymeren bestehen.

Vorteilhaft kann dem Acrylathaftkleber mindestens ein Klebharz beigemischt sein. Weiterhin können der Acrylathaftklebemasse Vernetzungsmittel und oder Additive beigemischt sein, letztere bevorzugt aus der Gruppe der Mikrokugeln, Nanopartikel, Färbemittel, thermisch leitfähigen Mittel, elektrisch leitfähigen Mittel, Alterungsschutzmittel, Lichtschutzmittel, Ozonschutzmittel, Fettsäuren, Weichmacher, Keimbildner, Blähmittel, Beschleuniger und/oder Füllmittel.
Die erste Kleberschicht dient bevorzugt zur Verklebung des Klebebandes mit einem Untergrund. Bei dem Untergrund kann es sich beispielsweise um Kunststoffe oder Metall-Kunststoff-Verbundwerkstoffe handeln, die in der Elektronik- und Telekommunikationsindustrie eingesetzt werden.
Das Flächengewicht der ersten Kleberschicht (2) beträgt bevorzugt zwischen 20 g/m² und 150 g/m², sehr bevorzugt zwischen 20 und 100 g/m².

Die zweite Haftklebeschicht dient zum Befestigen der Siliconkautschuke bzw. - schäume am Klebeband. Sie besteht aus einer Siliconhaftklebemasse, die chemisch oder physikalisch vernetzt ist.
Insbesondere durch eine radikalische Vernetzung kann die zeitabhängige Alterung der Siliconhaftklebemasse, gekennzeichnet durch steigende Kohäsion sowie verminderte Adhäsion, signifikant reduziert werden. Eine radikalische Vernetzung kann dabei vorteilhaft chemisch durch den Einsatz von BPO-Derivaten (Benzoylperoxid-Derivaten) und/oder durch den Einsatz von Elektronenstrahlen durchgeführt werden.
Sehr vorteilhaft weist der Siliconhaftkleber eine hohe Haftung auf unpolaren Substraten und Silikonkautschuken und/oder -schäumen sowie auf siliconisierten und/oder siliconhaltigen Untergründen auf.
Besonders bevorzugt wird die Vernetzung der Silikonhaftklebeschicht mittels Elektronenbestrahlung bewirkt (Elektronenstrahlhärtung, ESH). Insbesondere die Vernetzung mittels ESH führt in nicht erwarteter Weise zu zwei unmittelbar miteinander verbundenen Vorteilen. Die durch die ESH erzeugten Radikale führen einerseits zu einer Vernetzung der Siliconhaftklebemasse und zum anderen zur Bildung eines festen Verbundes der Haftklebemasse mit der PET-Folie. Eine mögliche Migration von weich machenden Reagenzien, die in den Siliconschäumen bzw. -kautschuken zur Einstellung des viskoelastischen Profils enthalten sind, wird somit deutlich erschwert, womit die Haftklebemasse die Temperaturstabilität beibehält. Der dennoch nicht vollständig auszuschließende Fall einer Weichmacherwanderung zieht aber aufgrund der chemisch miteinander verbundenen Silikonhaftklebemasse und der PET-Folie kein Umspulen der Masse nach sich, so dass eine dauerhafte und zuverlässige Verklebung gewährleistet ist. Die Siliconkleberschicht weist bevorzugt ein Flächengewicht von 20 bis 100 g/m² auf.

Als Siliconhaftklebemassen für die zweite Kleberschicht können besonders vorteilhaft sowohl die folgenden kondensationsvernetzenden Systeme bestehend aus Silikatharzen und Polydimethyl- oder Polydiphenylsiloxanen DC 280, DC 282, Q2-7735, DC 7358, Q2-7406 von Dow Corning, PSA 750, PSA 518, PSA 910 von GE Bayer Silicones, KRT 001, KRT 002, KRT 003 von ShinEtsu, PSA 45559 von Wacker Silicones sowie PSA 400 von Rhodia als auch vorteilhaft die folgenden additionsvernetzenden Systeme bestehend aus Silikatharzen, Polydimethyl- oder Polydiphenylsiloxanen und Crosslinkern (Vernetzersubstanzen,m insbesondere funktionalisierte Hydrosilane) DC 7657, DC 2013 von Dow Corning, PSA 6574 von GE Bayer Silicones, KR 3700, KR 3701 von ShinEtsu eingesetzt werden.

Es ist vorteilhaft, wenn der Träger vor dem Auftrag der Acrylathaftkleberschicht coronabehandelt wird und/oder zwischen dem Träger und der Siliconhaftkleberschicht eine Primerschicht vorgesehen ist.

In einer sehr bevorzugten Vorgehensweise sind eine oder beide der Haftklebeschichten vor der erfindungsgemäßen Verwendung mit Abdeckmaterialien versehen, vorteilhaft mit Trennpapier oder Trennfolie. Besonders bevorzugt ist die Acrylathaftkleberschicht mit einem Trennpapier oder einer siliconisierten Trennfolie abgedeckt, und/oder die Siliconhaftkleberschicht mit einer fluorsiliconisierten Folie.

Damit im aufgerollten Zustand die Kleberschichten des erfindungsgemäßen Klebebandes keinen Kontakt zueinander erhalten beziehungsweise die Siliconhaftklebemasse nicht mit dem Eindeckmaterial in Berührung kommt, sind beide Kleberschichten einzeln kaschiert. Dabei kann das Eindeckmaterial der Acrylathaftklebeschicht aus einem einseitig siliconisiertem Papier, aus siliconisiertem PE-beschichtetes Papier oder einer siliconisierten Folie bestehen. Im Fall der Siliconhaftklebemasse wird eine fluorosiliconisierte Folie verwendet.

Folgende Ausführungsbeispiele haben sich für das erfindungsgemäß eingesetzte Klebeband als besonders vorteilhaft erweisen:

**Beispiel 1**

| | |
|---|---|
| Trennmaterial für die erste Kleberschicht | Einseitig siliconisiertes PE-beschichtetes Papier mit einer Dicke von 115 g/m² |
| Erste Kleberschicht | Vernetzter Acrylathaftkleber mit einem Auftragsgewicht von 20 g/m² |
| Trägermaterial | PET-Folie mit einer Dicke von 12 µm |
| Zweite Kleberschicht | ESH-vernetzte Siliconhaftklebemasse mit einem Auftragsgewicht von 20 g/m² |
| Trennmaterial für die zweite Kleberschicht | Einseitig fluorosiliconisierte PET-Folie mit einer Dicke von 75 g/m² |

**Beispiel 2**

| | |
|---|---|
| Trennmaterial für die erste Kleberschicht | Einseitig siliconisiertes PE-beschichtetes Papier mit einer Dicke von 115 g/m² |
| Erste Kleberschicht | Vernetzter Acrylathaftkleber mit einem Auftragsgewicht von 36 g/m² |
| Trägermaterial | PET-Folie mit einer Dicke von 12 µm |
| Zweite Kleberschicht | ESH-vernetzte Siliconhaftklebemasse mit einem Auftragsgewicht von 36 g/m² |
| Trennmaterial für die zweite Kleberschicht | Einseitig fluorosiliconisierte PET-Folie mit einer Dicke von 75 g/m² |

**Beispiel 3**

| | |
|---|---|
| Trennmaterial für die erste Kleberschicht | Einseitig siliconisiertes PE-beschichtetes Papier mit einer Dicke von 115 g/m² |
| Erste Kleberschicht | Vernetzter Acrylathaftkleber mit einem Auftragsgewicht von 50 g/m² |
| Trägermaterial | PET-Folie mit einer Dicke von 12 µm |
| Zweite Kleberschicht | ESH-vernetzte Siliconhaftklebemasse mit einem Auftragsgewicht von 38 g/m² |
| Trennmaterial für die zweite Kleberschicht | Einseitig fluorosiliconisierte PET-Folie mit einer Dicke von 75 g/m² |

All diese Klebebänder haben sich als sehr geeignet zur erfindungsgemäß beschriebenen Verklebung gezeigt. Die beschriebenen Klebebänder eignen sich hervorragend auch zum Verkleben von geschäumten Silikonkautschuken und anderen Systemen auf Silikonbasis.

Die Erfindung bezieht sich somit auf ein Verfahren zur Verklebung von Siliconkautschuken oder -schäumen unter Verwendung eines doppelseitigen Klebebandes, bestehend aus einem bandförmigen Träger und beidseitig auf dem Träger angeordneten Haftkleberschichten, wobei die erste Kleberschicht aus einem Acrylathaftkleber und die zweite Haftkleberschicht aus einem Siliconkleber besteht, welches zum Befestigen von vibrationsdämpfenden Siliconkautschuken bzw. -schäumen eingesetzt wird, wobei die erste klebende Schicht insbesondere zum Befestigen auf einem Untergrund, wie einem Mobiltelefon- oder Bildschirmgehäuse bestehend aus reinem Kunststoff oder einem Metall-Kunststoff-Verbundmaterial, und die zweite klebende Schicht zur Fixierung des Siliconkautschuks bzw. -schaums an dem Klebeband dient, wobei der vernetzte Acrylathaftkleber insbesondere eine Kurzzeittemperaturbeständigkeit für Temperaturbelastungen von über 200 °C aufweist und die Siliconhaftklebemasse aufgrund von chemischer oder physikalischer Vernetzung zum einen Resistenz gegenüber Alterung und zum anderen gegenüber Weichmachern zeigt, was eine dauerhafte Verankerung der Siliconhaftklebemasse auf dem bandförmigen Träger zur Folge hat.

Erfindungsgemäß wird somit ein - bezogen auf den Produktaufbau - asymmetrisches Klebebandsystem geschaffen, mit dem vibrationsdämpfende Siliconkautschuke bzw. - schäume schnell und sinnvoll in Kunststoffgehäusen von beispielsweise Mobilfunktelefonen, Laptops oder Flachbildschirmen fixiert werden können. Hierbei kann entweder nach Entfernen des siliconisierten Abdeckpapiers das Klebeband mit dem Acrylatkleber auf dem Untergrund befestigt werden, um anschließend die fluorosiliconisierte Trennfolie des Siliconklebers zu entfernen, auf dem schließlich der Siliconkautschuk fixiert wird, oder das Klebeband wird nach Entfernen der fluorosiliconisierten Trennfolie von dem Siliconkleber zunächst großflächig auf den Siliconkautschuk laminiert, der Verbund im Anschluss gestanzt, und die so erhaltenen Stanzteile nach Entfernen des verbliebenen siliconisierten Abdeckpapiers mit der Acrylathaftklebemasse auf dem Untergrund befestigt. Die beidseitig verwendeten Eindeckmaterialien dienen zum Schutz gegen das Verkleben des druckempfindlichen Siliconklebers mit dem Eindeckpapier der Acrylathaftklebemasse im aufgerollten Zustand des erfindungsgemäßen Klebebandes, das in Rollenform gelagert und transportiert wird.

Die Erfindung betrifft weiterhin einen Klebeverbund
- mit einem Kunststoffuntergrund, insbesondere einem Elektronikbauteil,
- einem doppelseitigen Klebeband mit einem Träger und zwei Kleberschichten, wobei die erste Kleberschicht aus einer Haftklebemasse auf Acrylatbasis und die zweite Haftklebemasse aus einer vernetzten Siliconhaftklebemasse besteht,
- und einem Siliconkautschuk oder -schaum,
wobei die Acrylathaftklebemasse dem Kunststoffuntergrund und die Siliconhaftklebemasse dem Siliconkautschuk bzw. -schaum zugewandt ist. Das verwendete Klebeband ist dabei bevorzugt eines der vorstehend beschriebenen Klebebänder, wobei jede der beschriebenen Ausführungsformen vorteilhaft verwendet werden kann.

Letztlich betrifft die Erfindung ein doppelseitiges Klebeband, geeignet zur Befestigung von Siliconkautschuken in Elektronikbauteilen, mit einem Träger und zwei Kleberschichten, wobei die erste Kleberschicht aus einer Haftklebemasse auf Acrylatbasis und die zweite Haftklebemasse aus einer vernetzten Siliconhaftklebemasse besteht.

## Patentansprüche

1. Verfahren zur Verklebung von Siliconkautschuken oder -schäumen unter Verwendung eines doppelseitigen Klebebandes, wobei das Klebeband einen Träger und zwei Kleberschichten aufweist, wobei die erste Kleberschicht aus einer Haftklebemasse auf Acrylatbasis und die zweite Kleberschicht aus einer Siliconhaftklebemasse besteht, **dadurch gekennzeichnet, dass**
die Kleberschicht aus der Siliconhaftklebemasse auf dem Siliconkautschuk bzw. - schaum verklebt wird und die Siliconhaftklebemasse vor der Verklebung vernetzt ist.

2. Verfahren nach Anspruch 1, **dadurch gekennzeichnet, dass**
die Siliconhaftklebemasse eine solche auf Basis kondensationsvernetzender Systeme ist, insbesondere auf Basis von Polymethylsiloxanen und Silicatharzen oder Polydiphenylsiloxanen und Silicatharzen.

3. Verfahren nach Anspruch 1 zur Verklebung von Siliconkautschuken in Elektronikgeräten, insbesondere in Mobiltelefonen oder Flüssigkristalldisplays (LCDs).

4. Verfahren nach Anspruch 1, **dadurch gekennzeichnet, dass**
zumindest die Siliconhaftklebemasse elektronenstrahlvernetzt ist.

5. Verfahren nach zumindest einem der vorangehenden Ansprüche, **dadurch gekennzeichnet, dass**
die Acrylathaftkleberseite der Befestigung auf einem Untergrund bewirkt und die Siliconhaftkleberseite die Befestigung auf einem Siliconschaum oder einem Siliconkautschuk bewirkt.

## Claims

1. Method for bonding silicone rubbers or silicone foams using a double-sided adhesive tape, the adhesive tape having a backing and two layers of adhesive, the first layer of adhesive being composed of an acrylate-based pressure-sensitive adhesive and the second layer of adhesive being composed of a pressure-sensitive silicone adhesive,
**characterized in that** the layer of adhesive composed of the pressure-sensitve silicone adhesive is bonded to the silicone rubber or silicone foam and the pressure-sensitive silicone adhesive is crosslinked prior to the bonding.

2. Method according to Claim 1, **characterized in that** the pressure-sensitive silicone adhesive is based on condensation-crosslinking systems, in particular on polymethylsiloxanes and silicate resins or on polydiphenylsiloxanes and silicate resins.

3. Method according to Claim 1 for bonding silicone rubbers in electronic devices, in particular in mobile phones or liquid-crystal displays (LCDs).

4. Method according to Claim 1, **characterized in that** at least the pressure-sensitive silicone adhesive is crosslinked by electron beams.

5. Method according to at least one of the preceding claims,
**characterized in that** the pressure-sensitive acrylate adhesive side effects fastening on a substrate and the pressure-sensitive silicone adhesive side effects fastening on a silicone foam or silicone rubber.

## Revendications

1. Procédé de collage de caoutchouc ou de mousse de silicone par recours à un ruban adhésif double face, le ruban adhésif présentant un support et deux couches adhésives, la première couche adhésive étant constituée d'une pâte adhésive à base d'acrylate et la deuxième couche adhésive d'une pâte adhésive au silicone, **caractérisé en ce que**
la couche adhésive en pâte adhésive au silicone est collée sur le caoutchouc ou la mousse au silicone et la pâte adhésive au silicone est réticulée avant le collage.

2. Procédé selon la revendication 1, **caractérisé en ce que** la pâte adhésive au silicone est une pâte adhésive à base de systèmes réticulant par condensation, en particulier à base de polyméthylsiloxane et de résine de silicate ou de polydiphénylsiloxane et de résine de silicate.

3. Procédé selon la revendication 1, pour le collage de caoutchouc au silicone dans des appareils électroniques, en particulier dans des téléphones mobiles ou des écrans à cristaux liquides (LCD).

4. Procédé selon la revendication 1, **caractérisé en ce qu'**au moins la pâte adhésive au silicone est réticulée par faisceau d'électrons.

5. Procédé selon au moins l'une des revendications précédentes, **caractérisé en ce que** le côté d'adhésif à l'acrylate permet la fixation sur une base et le côté d'adhésif au silicone la fixation sur une mousse de silicone ou sur un caoutchouc au silicone.
